# EUROPEAN PATENT APPLICATION

(11) **EP 3 670 902 A1**
(43) Date of publication of application: **24.06.2020**
(21) Application number: 18213973.3
(22) Date of filing: 19.12.2018
(51) Int. Cl.: F03D 80/80, F16B 19/14

(54) **WIND TURBINE COMPRISING AT LEAST ONE ATTACHMENT ARRANGEMENT**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

Wind turbine comprising at least one attachment arrangement (1), wherein the attachment arrangement (1) comprises a first element (2) attached to a second element (3) via a fastening member (4), wherein the fastening member (4) comprises a fitting portion (5) and a threaded portion (6), wherein the fitting portion (5) is fixed to the second element (3) and the threaded portion (6) protrudes from a surface (7) of the second element (3) and through an opening of a fastening portion (9) of the first element (2), wherein between the fastening portion (9) of the first element (2) and the surface (7) of the second element (3), a first flexible washer (8) is arranged and between the fastening portion (9) and a nut (11) screwed on the threaded portion (6) of the fastening member (4) fixing the first element (2) against the second element (3), a second flexible washer (10) is arranged.

## Description

The invention relates to a wind turbine comprising at least one attachment arrangement, wherein the attachment arrangement comprises a first element attached to a second element via a fastening member, wherein the fastening member comprises a fitting portion and a threaded portion, wherein the fitting portion is fixed to the second element and the threaded portion protrudes from a surface of the second element and through an opening of a fastening portion of the first element.

It is known to use studs to attach elements of a wind turbine to a tower thereof. Such elements can be attached, for instance, to an inside of the tower wall of the wind turbine. To avoid through-holes in the tower of the wind turbine, or in components of the tower of the wind turbine, respectively, the studs used for fixation can be press-fitted partly into a surface of a component, wherein on the opposing side of the stud protruding from the component, the element or installation can be attached to the component or the tower wall, respectively.

However, since wind turbines are subject to forces induced for example from wind during operation, an oscillation of the wind turbine can appear. An oscillation of the tower of the wind turbine can result in a fatigue of the connection between the element and the tower wall. Furthermore, a fatigued connection can enable a movement or a displacement of the element relative to the tower wall causing damage or wear of a protective coating of the tower wall. Damage or wear of the protective coating can cause further damage to an underlying component of the tower wall, for instance due to corrosion. To avoid the contact between the attached elements, it is known to place a thick rubber washer in between the elements, which maintains a distance between the attached elements, so that wear of the protective coating can be prevented. However, due to the thick rubber washer, a construction attached to the wall can pivot due to loads acting on the element and/or in case of an oscillation of the wind turbine. The pivoting of the construction can lead to an introduction of bending moments into the stud causing a fatigue of the press-fitted connection. Bending moments in the stud can also occur due to a misalignment of the stud during fixation and/or due to imprecisions in fabrication of the attached construction, for instance of a flange of the construction.

It is therefore an object of the invention to provide an attachment arrangement for a wind turbine which is more resistant against oscillations of the wind turbine and which prevents damage to the attachment arrangement.

According to the invention, this problem is solved by a wind turbine as initially described, wherein between the fastening portion of the first element and the surface of the second element, a first flexible washer is arranged and between the fastening portion and a nut screwed on the threaded portion of the fastening member fixating the first element against the second element, a second flexible washer is arranged.

By the first flexible washer arranged between the fastening portion of the first element and the surface of the second element, a damage of a protective coating, in particular of the second element, due to pivoting of the first element can be prevented, since the first flexible washer separates the first element from the second element. By the second flexible washer, which is arranged between the fastening portion of the first element and the nut, a pivoting of the first element relative to the second element can be compensated, so that no or only a reduced bending moment is acting on the fastening member.

Both the first flexible washer and the second flexible washer can be annular comprising an outer diameter and an inner diameter, wherein the inner diameter is the diameter of an opening of the washer. The inner diameter of the first flexible washer and the second flexible washer can be as large or larger than the diameter of the threaded portion of the fastening member protruding from the second element, so that the first flexible washer and the second flexible washer can be arranged on the threaded portion of the fastening member.

The fastening member is fixed with its fitting portion to a surface of the second element. The fastening member can be a stud comprising a fitting portion and an adjacently abutting threaded portion. The fitting portion can be fixed to the second element for instance by gluing or by welding. It is, however, preferred that the fitting portion is press-fitted into the surface of the second element. The threaded portion of the fastening member protrudes from the surface of the second element. The threaded portion bears the first flexible washer, the first element, the second flexible washer and the nut. By screwing the nut onto the threaded portion or by tightening the nut screwed on the threaded portion, respectively, the first element as well as the first flexible washer and the second flexible washer can be fixed to the second element. It is possible that, between the nut and the second flexible washer, an additional washer, for instance a metal washer, is arranged. For fixing to the fastening member, the first element comprises a fastening portion with an opening, which can accommodate a section of the threaded portion protruding through the opening of the fastening portion.

It is possible that the first element comprises more than one fastening portion, so that the first element can be attached to one or more second elements via two or more fastening members. It is also possible that, to a second element, more than one first element is attached using each a fastening member.

Preferably, the second element is a component of a wind turbine tower wall, in particular a tubular steel shell or a segment of a tubular steel shell. It is possible that the second element comprises a protective layer, in particular a corrosion protective layer at least on the surface, to which the fitting portion of the fastening member is fixed. To avoid corrosion in the contact area between the fastening member and the surface of the second element, it is possible that the fastening member comprises an annular protrusion between the fitting portion and the threaded portion. To this annular protrusion, a seal can be attached to the side of the annular protrusion that is directed to the fitting portion. Due to the seal, the contact area, in which the fitting portion of the fastening member is fixed to the second element, is covered by the seal between the surface of the second element and the annular protrusion. By means of such a seal, for instance, corrosion of the contact area between the fastening member and the second element can be prevented.

Preferably, the first element is an installation attached to the tower wall, in particular a strut supporting a ladder, a pipe, a cable duct, an obstruction light, a lamp, a holder of a steel rope of an elevator of the wind turbine, or an electrical switch box. The first element can be attached to an inside of the wind turbine tower wall or to an outside of the wind turbine tower wall.

Preferably, the surface of the second element comprises a blind hole, wherein the fitting portion is press-fitted in the blind hole. In particular, the fitting portion is cylindrical or essentially cylindrical, wherein the diameter of the blind hole is smaller than the diameter of the fitting portion. The fastening member can be for instance a stud, in particular a stud which can be shot into the blind hole using a tool. The provision of the first flexible washer and the second flexible washer has the advantage that, also in case of a slight misalignment of the fastening member fixed to or press-fitted in the surface of the second element, the occurrence of bending moments in the fastening member can be reduced or prevented.

In a preferred embodiment of the invention, the first flexible washer has a smaller thickness than the second flexible washer. For the first flexible washer arranged between the fastening portion of the first element and the surface of the second element, the inventor has discovered that a small thickness is sufficient, since by the first flexible washer, a direct contact between the first element and the second element is avoided. By avoiding a contact between the first element and the surface of the second element, also damage to a protective coating of the surface of the second element can be prevented. The first flexible washer allows compensating a pivoting of the first element without a direct contact between the first element and the second element, so that the occurrence of damage to a coating of the surface of the second element can be prevented. By choosing the small thickness of the first flexible washer, the first element is more firmly supported against the surface of the second element, which leads, compared to the usage of a thicker rubber washer, to a constraint of a pivoting of the first element.

By the thicker second flexible washer, a load transfer into the nut, or an additional washer arranged between the second flexible washer and the nut, respectively, is balanced, so that an even load distribution on the nut and therefore on the fastening member is obtained. This even load distribution results in a reduction of bending moments introduced into the fastening member and therefore reduces the occurrence of damage or fatigue to the attachment of the fastening member to the second element.

The combination of a thinner first flexible washer and a thicker second flexible washer is advantageous in particular for a use in a wind turbine exhibiting oscillations during operation. The thinner first washer improves a support of the first element on the surface of the second element and therefore constraints a pivoting of the first element, wherein the thicker second flexible washer reduces or avoids the introduction of bending moments, or an asymmetric load, respectively, in the nut on the end of the threaded portion opposing the surface of the second element. Hence, both a pivoting of the first element due to oscillations occurring in the wind turbine and the effects of the possibly remaining, reduced pivoting of the first element on the, in particular press-fitted, attachment of the fastening member are reduced. Additionally, by choosing a thinner first flexible washer and a thicker second flexible washer, a fastening member with a comparatively short threaded portion can be used, further reducing the effect of bending moments on the, in particular press-fitted, attachment of the fastening member.

Preferably, the first flexible washer has a thickness between 1 mm and 3 mm and the second flexible washer has a thickness between 3 mm and 10 mm. It is, in particular, possible that the first flexible washer has a thickness of 2 mm and/or that the second flexible washer has a thickness between 5 mm and 7 mm, in particular of 6 mm.

Preferably, a surface of the fastening portion extends parallel or essentially parallel to the surface of the second element, wherein the outer diameter of the first flexible washer is as large as or larger than the extension of the surface of the fastening portion parallel or essentially parallel to the surface of the second element. By providing a first flexible washer with a diameter that is as large as or larger than the extension of the surface of the fastening portion parallel or essentially parallel to the surface of the second element, any contact between the fastening portion, or the first element, respectively, and a second element can be avoided.

The surface of the fastening portion can be, for instance, rectangular or circular, wherein the diameter of the first flexible washer is as large as or larger than the extension of the surface of the fastening portion parallel or essentially parallel to the surface of the second element, so that the first flexible washer is arranged in the entire gap between the surface of the fastening portion of the first element and the surface of the second element. The provision of the first flexible washer has the advantage that also a flatness imperfection or a coarseness in the surface of the fastening portion supporting of the first element to the second element can be compensated due to the flexibility of the first flexible washer.

Preferably, the first flexible washer and the second flexible washer consist of rubber and/or plastic. The first flexible washer and the second flexible washer can consist of the same material or they can consist of different materials, respectively. The first flexible washer and the second flexible washer can consist, for instance, of high-density polyethylene (PEHD). It is also possible that other plastic and/or rubber materials are used for the first flexible washer and/or the second flexible washer.

Further details and advantages of the invention become evident from the embodiments discussed below as well as from the figures. The figures are schematical and show:
- Fig. 1: an attachment arrangement of a wind turbine according to the invention,
- Fig. 2: a detailed view on an embodiment of a fastening member, and
- Fig. 3: a wind turbine according to the invention.

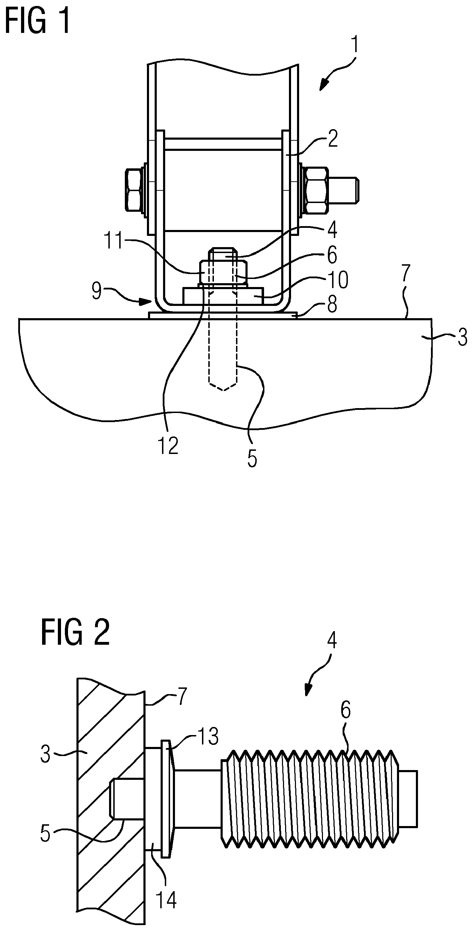

In fig. 1, an attachment arrangement 1 of a wind turbine according to the invention is shown. The attachment arrangement 1 comprises a first element 2 and a second element 3, wherein the first element 2 is attached to the second element 3 via a fastening member 4. The fastening member 4 comprises a fitting portion 5, which is press-fitted into the second element 3. Furthermore, the fastening member 4 comprises a threaded portion 6, which protrudes from the surface 7 of the second element 3. Alternatively, the fitting portion 5 can be welded to or glued to the surface 7 of the second element 3 so that the threaded portion 6 protrudes from the surface 7. Both the fitting portion 5 and the threaded portion 6 are indicated by dashed lines in fig. 1. An embodiment of a fastening member 4 is described later in more detail with respect to fig. 2.

On the threaded portion 6 protruding from the surface 7 of the second member 3, a first flexible washer 8 is arranged between the second element 3 and a fastening portion 9 of the first element 2. In this embodiment, the fastening portion 9 is formed by a flange of the first element 2. A second flexible washer 10 is arranged between the fastening portion 9 of the first element 2 and a nut 11, wherein the nut 11 fixes the first element 2 against the second element 3. Between the nut 11 and the second flexible washer 10, an additional washer 12, for instance a metal washer, is arranged. However, the provision of the additional washer 12 is optional and can be omitted.

The first flexible washer 8 and the second flexible washer 10 are made of rubber material, for instance of high-density polyethylene, so that they each exhibit a certain flexibility. The first flexible washer 8 prevents damage to the surface 7 of the second element 3, in particular to a coating disposed on the surface 7 of the second element 3.

The second element 3 can be, for instance, a steel segment of a tower shell of a wind turbine tower, to which an installation like a strut, a cable duct or a pipe as first element 2 is attached using the fastening means 4. During an operation of the wind turbine comprising the attachment arrangement 1, oscillations can occur in the first element 2 and/or the second element 3. The oscillations can cause a pivoting of the first element 2 with respect to the second element 3. By using a thin first flexible washer 8, for instance with a thickness of 2 mm, the first element 2, or the fastening portion 9 of the first element 2, respectively, is firmly supported on the surface 7 of the second element 3. A contact between the first element 2 and the surface 7 of the second element 3 can be avoided and damage, in particular to a protective coating of the surface 7 of the second element 3, is prevented. Due to the second flexible washer 10, an introduction of bending moments into the fastening member 4 is reduced or prevented, since the second flexible washer 10 can compensate a displacement of the first element 2. Therefore, the second flexible washer 10 is thicker than the first flexible washer 8. In particular, the second flexible washer 10 can have a thickness of 6 mm.

By compensating a pivoting of the first element 2, the introduction of bending moments into the fastening member 4 can be reduced or prevented. By reducing or preventing the introduction of bending moments into the fastening member 4, a loosening of the press-fitting of the fitting portion 5 of the fastening member 4 in the second element 3 can be avoided. Furthermore, due to the first flexible washer 8, a tight support of the fastening portion 9 against the surface 7 of the second element 3 can be obtained even if the surface of the fastening portion 9, which is in contact with the first flexible washer 8, is not perfectly flat or perfectly parallel to the surface 7. By the first flexible washer 8 and the second flexible washer 10, also a misalignment of the fastening means 4 can be compensated, in particular if the threaded portion 6 is not protruding exactly orthogonal from the surface 7.

In fig. 2, a detailed view of an embodiment of a fastening member 4 is shown. The fastening member 4 is a stud comprising the threaded portion 6 and a coaxially aligned fitting portion 5, which is press-fitted into the second element 3. For the press-fitting, a blind hole can be created in the surface 7 of the second element 3, wherein the fitting portion 5 is press-fitted into the blind hole. The blind hole can have a diameter slightly less than the diameter of the essentially cylindrical fitting portion 5 of the fastening member 4.

Between the fitting portion 5 and the threaded portion 6, an annular protrusion 13 is provided. In between the annular protrusion 13 and the second element 3, a seal 14 is arranged. The seal 14 is attached to the side of the annular protrusion 13 directed towards the fitting portion 5, or the second element 3, respectively.

By the seal 14, the contact area between the fitting portion 5 and the second element 3 is sealed, so that by press-fitting the fastening member 4 to a surface 7 comprising a corrosion-projective coating, also the contact area comprising the blind hole is sealed to prevent corrosion. The first flexible washer 8, which comprises an annular shape, can have an inner diameter which is as large as or larger than the diameter of the annular protrusion 13, so that the first flexible washer 8 lies smoothly on the surface 7 of the second element 3. As it is depicted in fig. 1, the fastening portion 9 is arranged on top of the first flexible washer 8, wherein the fastening portion 9 comprises an opening, through which the threaded portion 6 and/or the annular protrusion 13 can protrude in a mounted state of the first element 2.

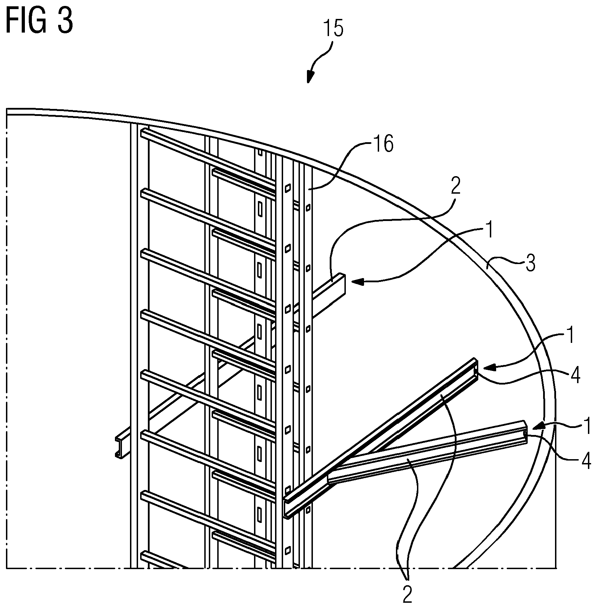

In fig. 3, a wind turbine 15 according to the invention is shown. The second element 3 is a tubular steel shell tower segment, to which three first elements 2 are attached, such that three attachment arrangements 1 are formed. In this embodiment, the first elements 2 are supporting struts supporting a ladder 16, which is arranged inside of the tower of the wind turbine 15. Additionally or alternatively to the ladder 16, also other elements or installations can be mounted to the inside and/or to the outside of the wind turbine tower as first elements 2 of an attachment arrangement 1. For instance, an obstruction light can be mounted to the outside of the wind turbine tower using the attachment arrangement 1. Also a lamp, a holder of a steel rope of an elevator of the wind turbine, or an electrical switch box can be mounted as a first element 2 to the inside or the outside of the wind turbine tower, respectively.

It is in particular possible that two or more first elements 2 are attached to one second element 3 and/or that one or more of the first elements 2 are attached to two or more second elements 3, each via a fastening member 4 as previously described.

Although the present invention has been described in detail with reference to the preferred embodiment, the present invention is not limited by the disclosed examples from which the skilled person is able to derive other variations without departing from the scope of the invention.

## Claims

1. Wind turbine comprising at least one attachment arrangement (1), wherein the attachment arrangement (1) comprises a first element (2) attached to a second element (3) via a fastening member (4), wherein the fastening member (4) comprises a fitting portion (5) and a threaded portion (6), wherein the fitting portion (5) is fixed to, in particular press-fitted into, the second element (3) and the threaded portion (6) protrudes from a surface (7) of the second element (3) and through an opening of a fastening portion (9) of the first element (2), **characterized in that** between the fastening portion (9) of the first element (2) and the surface (7) of the second element (3), a first flexible washer (8) is arranged and between the fastening portion (9) and a nut (11) screwed on the threaded portion (6) of the fastening member (4) fixing the first element (2) against the second element (3), a second flexible washer (10) is arranged.

2. Wind turbine according to claim 1, **characterized in that** the surface (7) of the second element (3) comprises a blind hole, wherein the fitting portion (5) is press-fitted in the blind hole.

3. Wind turbine according to claim 1 or 2, **characterized in that** the first flexible washer (8) has a smaller thickness than the second flexible washer (10).

4. Wind turbine according to one of the preceding claims, **characterized in that** the first flexible washer (8) has a thickness between 1mm and 3mm and the second flexible washer (10) has a thickness between 3mm and 10mm.

5. Wind turbine according to one of the preceding claims, **characterized in that** a surface of the fastening portion (9) extends parallel or essentially parallel to the surface (7) of the second element (3), wherein the outer diameter of the first flexible washer (8) is as large as or larger than the extension of the surface (7) of the fastening portion (9) parallel or essentially parallel to the surface (7) of the second element (3).

6. Wind turbine according to one of the preceding claims, **characterized in that** the first flexible washer (8) and the second flexible washer (10) consist of rubber and/or plastic.

7. Wind turbine according to one of the preceding claims, **characterized in that** the second element (3) is a component of a wind turbine tower wall, in particular a tubular steel shell or a segment of a tubular steel shell.

8. Wind turbine according to claim 7, **characterized in that** the first element (3) is an installation attached to the tower wall, in particular a strut supporting a ladder (16), a pipe, a cable duct, an obstruction light, a lamp, a holder of a steel rope of an elevator of the wind turbine, or an electrical switch box.
